# EUROPÄISCHE PATENTSCHRIFT

(11) **EP 1 477 719 B1**
(45) Veröffentlichungstag und Bekanntmachung des Hinweises auf die Patenterteilung: **01.03.2006**
(21) Anmeldenummer: 03405332.2
(22) Anmeldetag: 13.05.2003
(51) Int. Cl.: F16L 33/207

(54) **Anschlussvorrichtung für ein Leitungsrohr**
Connecting means for a pipe
Dispositif de raccordement pour un tuyau

(43) Veröffentlichungstag der Anmeldung: 17.11.2004
(73) Patentinhaber: GEBERIT TECHNIK AG, 8645 Jona (CH)
(72) Erfinder: Scholz, Jürg, 8841 Gross (CH); Heusser, Urs, 8625 Gossau (CH)
(74) Vertreter: Groner, Manfred

(56) Entgegenhaltungen:
- EP-A- 0 940 620
- DE-U- 20 002 952
- DE-U- 29 701 223
- US-A- 2 978 263

## Beschreibung

Die Erfindung betrifft eine Anschlussvorrichtung für ein Leitungsrohr, mit einem Fitting, der wenigstens eine Stützhülse besitzt, mit einer Presshülse, die plastisch verformbar ist und die an einem inneren Ende mit einem Isolierring verbunden ist, der transparent ausgebildet ist und eine Sichtkontrolle eines auf die Stützhülse aufgeschobenen Endes des Leitungsrohres ermöglicht. Die Erfindung betrifft zudem ein besonders geeignetes Presswerkzeug für eine Anschlussvorrichtung gemäss Anspruch 1, eine Verbindung mit einer Anschlussvorrichtung sowie ein Verfahren zur Herstellung einer Pressverbindung.

Eine Anschlussvorrichtung der genannten Art ist im Stand der Technik aus der DE 297 01 223 U bekannt geworden. Diese Anschlussvorrichtung weist einen Isolierring auf, der aus durchscheinendem bzw. durchsichtigem Kunststoff hergestellt ist. Die Transparenz dieses Isolierringes ist so stark, dass ein Einblick in den Ringraum gewährleistet ist, in den das anzuschliessende Ende des Leitungsrohres einzuschieben ist. Der Isolierring ermöglicht deshalb eine Kontrolle und Feststellung der Einschubtiefe des Leitungsendes. Der Isolierring bildet eine achsiale Verlängerung der Presshülse und weist an einem Ende eine Rippe auf, die in eine Nut des Fittings eingreift und damit die Presshülse mit dem Fitting verbindet.

Der Erfindung liegt die Aufgabe zugrunde, eine Anschlussvorrichtung der genannten Art zu schaffen, die einfach und kostengünstig herstellbar und dennoch funktionssicher ist.

Die Aufgabe ist bei einer gattungsgemässen Anschlussvorrichtung dadurch gelöst, dass die Presshülse den Isolierring achsial durchgreift und mit einem Halterand unverlierbar am Fitting befestigt ist und dass die Presshülse im Bereich des Isolierrings Durchbrüche für die Sichtkontrolle aufweist. Bei der erfindungsgemässen Anschlussvorrichtung ist die Presshülse nicht mittelbar über den Isolierring mit dem Fitting verbunden, sondern unmittelbar mittels eines Halterandes an diesem verankert. Der Isolierring dient bei der erfindungsgemässen Anschlussvorrichtung somit nicht als Befestigungsmittel, sondern lediglich als Dichtmittel. Zur visuellen Kontrolle der Einstecktiefe weist die Presshülse im Bereich des Isolierrings Durchbrüche auf. Diese Durchbrüche werden vom Isolierring abgedichtet. Durch die unmittelbare Verankerung der Presshülse am Fitting ergibt sich eine grössere Stabilität und damit ergibt sich auch ein zuverlässigerer Sitz des Isolierringes.

Eine besonders stabile Anschlussvorrichtung ergibt sich dann, wenn gemäss einer Weiterbildung der Erfindung der Isolierring in den genannten Durchbrüche der Presshülse befestigt ist. Die Durchbrüche zur visuellen Kontrolle der Einschubtiefe dienen hier somit gleichzeitig zur Befestigung des Isolierringes.

Nach einer Weiterbildung der Erfindung ist vorgesehen, dass der Isolierring die genannten Durchbrüche durchgreift und an der Innenseite der Presshülse Vorsprünge zur achsialen Fixierung eines eingesetzten Leitungsendes bildet. Diese Vorsprünge liegen beim eingesetzten Leitungsende an diesem aussenseitig an und fixieren damit das Leitungsende reibschlüssig. Damit ist das Leitungsende in der Endposition achsial fixiert. Durch diese Fixierung ist sichergestellt, dass sich die Anschlussvorrichtung vor dem Verpressen nicht unbeabsichtigt verschiebt.

Die genannten Vorsprünge an der Innenseite der Presshülse sind gemäss einer Weiterbildung der Erfindung sich achsial erstreckende Rippen. Damit ist eine besonders gute achsiale Fixierung möglich, ohne dass hierbei das Einschieben erschwert würde.

Eine besonders kostengünstige Herstellung der erfindungsgemässen Anschlussvorrichtung ist dann möglich, wenn gemäss einer Weiterbildung der Erfindung der Isolierring ein Anspritzteil ist und die genannten Durchbrüche durchspritzt sind. Der Isolierring ist dann besonders zuverlässig auf der Presshülse befestigt und beim Anspritzen können gleichzeitig die oben genannten Vorsprünge bzw. Rippen gebildet werden.

Eine besonders zuverlässige Dichtung ergibt sich dann, wenn gemäss einer Weiterbildung der Erfindung ein sich achsial erstreckender Dichtrand des Isolierringes mit einer Mantelfläche einer Schulter des Fittings eine Dichtverbindung bildet. Vorzugsweise liegt dieser Dichtrand unter Vorspannung an der Schulter des Fittings an. Nach einer Weiterbildung ist vorgesehen, dass die Schulter des Fittings eine umlaufende Rippe aufweist, an welcher der Dichtrand des Isolierringes anliegt. Damit ergibt sich eine genau definierte Dichtung zwischen dem Isolierring und dem Fitting.

Nach einer Weiterbildung der Erfindung ist vorgesehen, dass die Presshülse an einem freien Ende aufgeweitet ist und eine Schulter bildet, die zur Führung des Presswerkzeuges vorgesehen ist. Das Presswerkzeug ist hierbei vorzugsweise an der genannten Schulter und im Abstand dazu gegenüberliegend an einem Wulst des Isolierringes geführt. Damit ergibt sich ein besonders präzises Verpressen der Presshülse.

Nach einer Weiterbildung der Erfindung ist vorgesehen, dass die Presshülse an ihrer Aussenseite einen wenigstens bereichsweise umlaufenden Kontrollkörper aufweist, der beim Verpressen durch das Presswerkzeug wenigstens bereichsweise entfernbar und insbesondere abscherbar ist. Damit ist visuell sofort erkennbar, ob die Presshülse verpresst wurde. Der Kontrollkörper ist vorzugsweise visuell auffällig ausgebildet, beispielsweise auffällig gefärbt, sodass sofort erkennbar ist, ob dieser Kontrollkörper vorhanden ist. Ist er noch vorhanden, so ist anzunehmen, dass die Presshülse noch nicht verpresst wurde.

Eine besonders kostengünstige Herstellung der Anschlussvorrichtung ergibt sich dann, wenn gemäss einer Weiterbildung der Erfindung der Kontrollkörper ein Anspritzteil ist. Vorzugsweise weist die Presshülse Durchbrüche auf, durch welche der Kontrollkörper hindurchgespritzt ist.

Nach einer Weiterbildung der Erfindung ist vorgesehen, dass der Kontrollkörper durch die Durchbrüche hindurchgespritzt ist und an der Innenseite der Presshülse einen Ring bildet, der als Führung beim Einsetzen des Leitungsrohrendes vorgesehen ist. Durch diesen Ring ist somit das Einsetzen des Leitungsrohrringes einfacher möglich.

Bei einem besonders geeigneten Presswerkzeug für die erfindungsgemässe Anschlussvorrichtung ist vorgesehen, dass die Pressbacken zwei im Abstand zueinander angeordnete geneigte Flächen aufweisen, wobei eine erste Fläche beim Verpressen an einer Fläche des Isolierringes anliegt und eine zweite Fläche auf einen im Abstand zum Isolierring angebrachten Kontrollkörper eine achsiale Scherkraft ausübt. Damit ergibt sich einerseits eine besonders zuverlässige Führung des Presswerkzeuges und andererseits kann der Kontrollkörper mittels einer achsialen Scherkraft vollständig entfernt bzw. abgeschert werden.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: ein Querschnitt durch eine erfindungsgemässe Anschlussvorrichtung, wobei in der oberen Hälfte die Presshülse nicht verpresst und im unteren Teil verpresst ist,
- Figur 2: ein Querschnitt entlang der Linie II-II der Figur 1 und
- Figur 3: ein Schnitt entlang der Linie III-III der Figur 1.

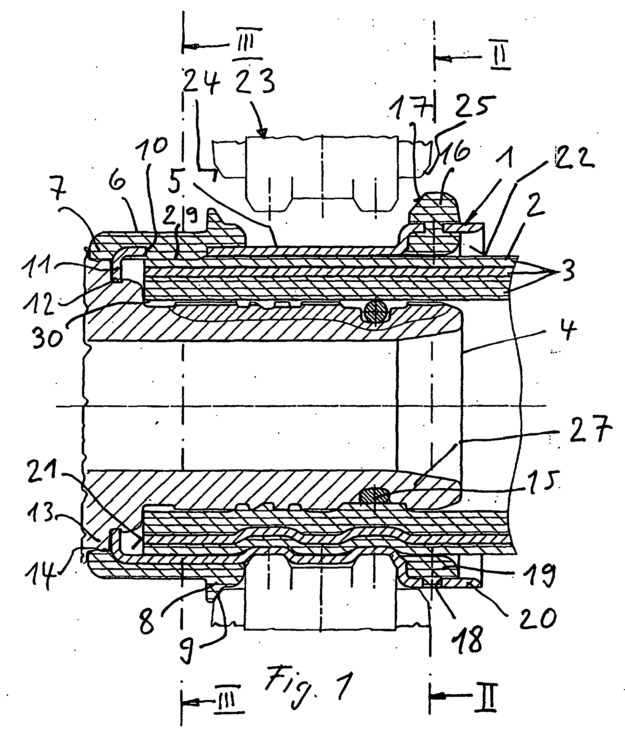

Die in Figur 1 gezeigte Anschlussvorrichtung 1 dient zum Verbinden eines Leitungsrohres 2 mit einem Fitting 4, der eine zylindrische Stützhülse 27 aufweist. Die Stützhülse 27 weist einen Dichtungsring 15 auf, der in eine umlaufende Nut der Stützhülse 27 eingelegt ist. Der Fitting 4 ist insbesondere aus Messing und weist ein hier nicht gezeigtes weiteres Anschlussteil, beispielsweise einen Gewindestutzen auf.

Das anzuschliessende Leitungsrohr 2 ist insbesondere ein Wasserrohr, das biegbar ist und mehrere Schichten 3 besitzt, die fest miteinander verbunden sind. Insbesondere bestehen eine mittlere Schicht aus Metall und eine äussere und eine innere Schicht aus Kunststoff. Solche Leitungsrohre sind an sich bekannt.

Die Anschlussvorrichtung 1 besitzt eine Presshülse 5, die aus Metallblech hergestellt und plastisch verformbar ist. An einem inneren Ende besitzt diese Presshülse 5 einen radial nach innen abgebogenen Rand 11, der an seinem Umfang mit hier nicht gezeigten Unterbrechungen versehen ist und der in eine Nut 12 des Fittings 4 eingreift. Dieser Rand 11 verbindet die Presshülse 5 fest mit dem Fitting 4. Die Presshülse 5 ist damit unverlierbar am Fitting 4 verankert. Im Abstand zum Rand 11 besitzt die Presshülse 5 mehrere Durchbrüche 10, die als Durchgangsbohrungen ausgebildet sind. Diese Durchbrüche 10 sind so angeordnet, dass durch diese hindurch eine Sichtkontrolle für das Leitungsrohr 2 möglich ist, wenn dieses bis zur Anschlagfläche 30 eingeschoben ist.

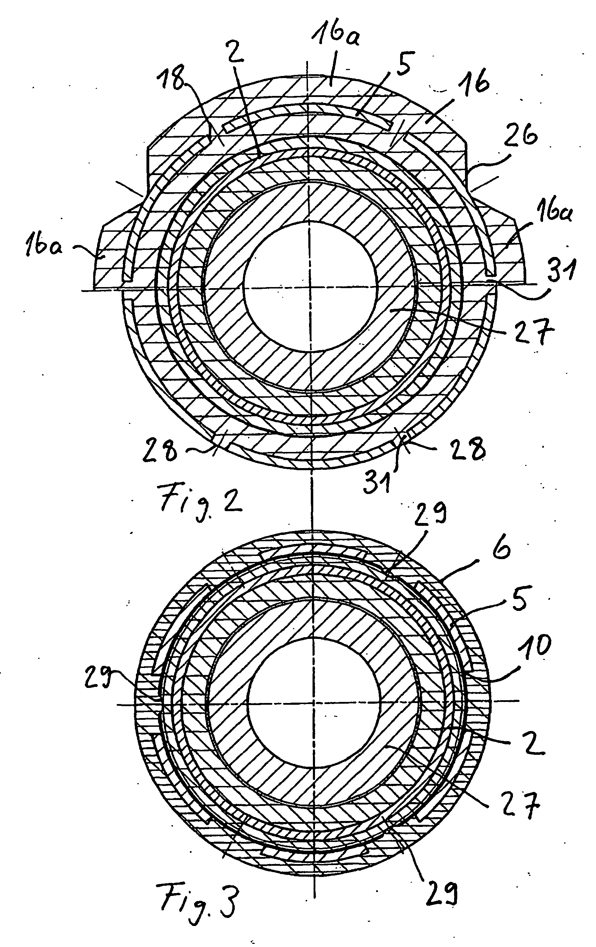

An der Presshülse 5 ist ein Isolierring 6 angespritzt, der aus transparentem Kunststoff besteht und der durch die Durchbrüche 10 hindurchgespritzt ist. An der Innenseite wenigstens eines Durchbruchs 10 bildet der Isolierring 6 eine Rippe 29, die am eingeschobenen Leitungsrohr 2 aussenseitig anliegt und dieses Leitungsrohr 2 achsial fixiert. Grundsätzlich ist es zweckmässig, wenn gemäss den Figuren 2 und 3 bei drei von sechs Durchbrüchen 10 jeweils eine solche Rippe 29 angeformt ist. Dadurch ist gewährleistet, dass bei eingeschobenem Leitungsrohr 2 dieses vor dem Verpressen der Presshülse 5 die Anschlussvorrichtung 1 achsial fixiert ist und sich nicht versehentlich verschieben kann.

Der Isolierring 6 besitzt einen umlaufenden Rand 7, der über den Rand 11 der Presshülse 5 achsial hinausragt und der an einer Aussenseite einer Schulter 13 dichtend anliegt. An der Schulter 13 ist aussenseitig eine Dichtrippe 14 angeformt, an welcher der Dichtrand 7 anliegt. Dadurch ist eine Dichtverbindung geschaffen, die einen Zutritt von Feuchtigkeit zur Stirnseite 21 des Leitungsrohres 2 verhindert.

Im Abstand zum Dichtrand 7 ist am Isolierring 6 ein Wulst 8 angeformt, der radial nach aussen vorsteht und der innenseitig eine geneigte Fläche 9 besitzt, die als Führungsfläche für ein Presswerkzeug und insbesondere eine Presszange 23 vorgesehen ist. Der Isolierring 6 besitzt somit wenigstens drei Funktionen. Erstens bildet er mit dem Dichtrand 7 ein Dichtmittel. Zweitens bildet er mit den Rippen 29 ein Mittel zur Fixierung des Leitungsrohres 2 und drittens bildet er mit dem Wulst 8 eine Führung für das Presswerkzeug 23.

Im Abstand zum Isolierring 6 ist an der Presshülse 5 ein Kontrollkörper 16 befestigt, der vorzugsweise ebenfalls aus einem transparenten Kunststoff besteht und der an der Presshülse 5 angespritzt ist. Dieser Kontrollkörper 16 ist durch Durchbrüche 18 einer Aufweitung 20 hindurchgespritzt und bildet innenseitig an dieser Aufweitung 20 einen Führungsteil 19. Die Durchbrüche 18 sind vorzugsweise vergleichsweise kleine Bohrungen. An der Innenseite des Kontrollkörpers 16 ist eine geneigte Fläche 17 angeordnet, die der Fläche 9 gegenüberliegt.

Wird die Presshülse 5 mit dem Presswerkzeug 23 verpresst, so ist eine geneigte Fläche 24 des Presswerkzeugs 23 an der geneigten Fläche 9 des Isolierringes 6 geführt. Eine gegenüberliegende geneigte Fläche 25 besitzt zur geneigten Fläche 24 einen Abstand, der grösser ist als der Abstand zwischen den geneigten Flächen 9 und 17. Beim Verpressen wird damit auf den äusseren Bereich des Kontrollkörpers 16 eine achsiale Scherkraft ausgeübt. Da nun der äussere Bereich des Kontrollkörpers 16 lediglich über vergleichsweise schmale Stege 31 mit dem Führungsring 19 verbunden ist, wird dieser äussere Bereich des Kontrollkörpers 16 beim Verpressen abgeschert. In der Figur 1 ist der Kontrollkörper 16 vor dem Verpressen und im unteren Bereich nach dem Verpressen gezeigt. Wie ersichtlich ist der obere Bereich des Kontrollkörpers 16 entfernt und an den Durchbrüchen 18 sind gemäss Figur 2 entsprechende Bruchstellen 28 sichtbar. Damit der Kontrollkörper 16 vollständig abgeschert werden kann, ist dieser gemäss Figur 2 mit mehreren radialen Einschnitten 26 versehen. Der Kontrollkörper 16 besteht somit aus mehreren, beispielsweise drei Segmenten 16a.

Nachfolgend wird das Herstellen einer Pressverbindung erläutert.

Um das in Figur 1 gezeigte Ende des Leitungsrohres 2 anzuschliessen, wird dieses entsprechend abgelängt und damit die blanke Stirnseite 21 gebildet. Die Anschlussvorrichtung 1, die vollständig vormontiert ist, wird auf das anzuschliessende Ende des Leitungsrohres 2 aufgesetzt. Wie oben erläutert, dient hierbei der Führungsteil 19 als Führung, wobei das Leitungsrohr 2 mit seiner Aussenseite 22 an diesem Führungsteil 19 entlang gleitet. Das Leitungsrohr wird eingeschoben, bis die Stirnseite 21 an der Anschlagfläche 30 anliegt. Durch die Durchbrüche 10 hindurch wird die vorgesehene vollständige Einführung des Leitungsrohres 2 visuell kontrolliert. Durch die Rippen 29 ist diese Position achsial fixiert. Nun wird das Presswerkzeug 23 gemäss Figur 1, oberer Teil, angelegt. Das Verpressen kann in bekannter Weise von Hand oder motorisch erfolgen. Wie oben erläutert, wird beim Verpressen der Kontrollkörper 16 entfernt bzw. abgeschert. Anschliessend wird die Presshülse 5 plastisch verformt und gleichzeitig wird das Leitungsrohr 2 gemäss Figur 1, unterer Teil, plastisch verformt, wobei der Dichtungsring 15 elastisch deformiert wird. Der Fitting 4 ist damit hydraulisch dicht und mechanisch fest mit dem Leitungsrohr 2 verbunden. Da der Kontrollkörper 16 nicht mehr vorhanden ist, kann aus vergleichsweise grosser Distanz sofort erkannt werden, dass die Anschlussvorrichtung verpresst wurde. Andererseits weist ein noch vorhandener Kontrollkörper 16 darauf hin, dass noch nicht verpresst wurde. Aufgrund der vorzugsweise auffälligen Einfärbung des Kontrollkörpers 16 ist dies entsprechend gut erkennbar.

## Patentansprüche

1. Anschlussvorrichtung für ein Leitungsrohr (2), mit einem Fitting (4), der wenigstens eine Stützhülse (27) besitzt, mit einer Presshülse (5), die plastisch verformbar ist und die an einem inneren Ende mit einem Isolierring (6) verbunden ist, der transparent ausgebildet ist und eine Sichtkontrolle eines auf die Stützhülse (27) aufgeschobenen Endes des Leitungsrohres (2) ermöglicht, **dadurch gekennzeichnet, dass** die Presshülse (5) den Isolierring (6) achsial durchgreift und mit einem Halterand (11) unverlierbar am Fitting (4) befestigt ist und dass die Presshülse (5) im Bereich des Isolierringes (6) Durchbrüche (10) für die Sichtkontrolle aufweist.

2. Vorrichtung nach Anspruch 1, **dadurch gekennzeichnet, dass** der Isolierring (6) in den genannten Durchbrüchen (10) an der Presshülse (5) befestigt ist.

3. Vorrichtung nach Anspruch 2, **dadurch gekennzeichnet, dass** der Isolierring (6) die genannten Durchbrüche (10) durchgreift und an der Innenseite der Presshülse (5) Vorsprünge (29) zur achsialen Fixierung eines eingesetzten Rohrendes bildet.

4. Vorrichtung nach Anspruch 3, **dadurch gekennzeichnet, dass** der Isolierring (6) an der Innenseite der Presshülse (5) sich achsial erstreckende Rippen (29) bildet.

5. Vorrichtung nach einem der Ansprüche 2 bis 4, **dadurch gekennzeichnet, dass** der Isolierring (6) ein Anspritzteil ist und die genannten Durchbrüche (10) durchspritzt sind.

6. Vorrichtung nach einem der Ansprüche 1 bis 5, **dadurch gekennzeichnet, dass** ein sich achsial erstreckender Dichtrand (7) des Isolierringes (6) mit einer Mantelfläche einer Schulter (13) des Fittings (4) eine Dichtverbindung bildet.

7. Vorrichtung nach Anspruch 6, **dadurch gekennzeichnet, dass** der Dichtrand (7) die Presshülse (5) achsial überragt.

8. Vorrichtung nach Anspruch 7, **dadurch gekennzeichnet, dass** die genannte Schulter (13) des Fittings (4) eine umlaufende Rippe (14) aufweist, an welcher der Dichtrand (7) des Isolierringes (6) aufliegt.

9. Vorrichtung nach einem der Ansprüche 1 bis 8, **dadurch gekennzeichnet, dass** der Isolierring (6) einen Wulst (8) als Führung für ein Presswerkzeug (23) aufweist.

10. Vorrichtung nach Anspruch 9, **dadurch gekennzeichnet, dass** der Wulst (8) wenigstens eine geneigte Fläche (9) zur Zentrierung des Presswerkzeuges (23) aufweist.

11. Vorrichtung nach einem der Ansprüche 1 bis 10, **dadurch gekennzeichnet, dass** die Presshülse (5) an einem freien Ende aufgeweitet ist und eine Schulter bildet, die zur Führung (19) des Presswerkzeuges (23) vorgesehen ist.

12. Vorrichtung nach einem der Ansprüche 1 bis 11, **dadurch gekennzeichnet, dass** die Presshülse (5) an ihrer Aussenseite einen wenigstens bereichsweise umlaufenden Kontrollkörper (16) aufweist, der beim Verpressen durch das Presswerkzeug (23) entfernbar und insbesondere abscherbar ist.

13. Vorrichtung nach Anspruch 12, **dadurch gekennzeichnet, dass** der Kontrollkörper (16) an seinem Umfang unterbrochen ist und **dadurch** wenigstens zwei sich in Umfangsrichtung erstreckende Segmente (16a) gebildet werden.

14. Vorrichtung nach Anspruch 12 oder 13, **dadurch gekennzeichnet, dass** der Kontrollkörper (16) ein Anspritzteil ist.

15. Vorrichtung nach einem der Ansprüche 12 bis 14, **dadurch gekennzeichnet, dass** der Kontrollkörper (16) in weitere Durchbrüche (18) der Presshülse (5) eingreift und in diesen verankert ist.

16. Vorrichtung nach Anspruch 15, **dadurch gekennzeichnet, dass** der Kontrollkörper (16) durch die weiteren Durchbrüche (18) hindurchgespritzt ist und an der Innseite einen Führungsteil (19) bildet, der als Führung (19) beim Einsetzen eines Rohrendes vorgesehen ist.

17. Vorrichtung nach Anspruch 16, **dadurch gekennzeichnet, dass** der Führungsteil (19) an der Innenseite einer Aufweitung (20) der Presshülse (5) angeordnet ist.

18. Vorrichtung nach einem der Ansprüche 12 bis 17, **dadurch gekennzeichnet, dass** der Kontrollkörper (16) aus einem transparenten und mit einem Farbstoff eingefärbten Kunststoff hergestellt und visuell auffällig ist.

19. Vorrichtung nach einem der Ansprüche 12 bis 18, **dadurch gekennzeichnet, dass** der Kontrollkörper (16) an der Aussenseite der Presshülse (5) eine geneigte Fläche (17) aufweist, die zum Abscheren mit einer geneigten Fläche des Presswerkzeugs (23) in Eingriff bringbar ist.

20. Presswerkzeug (23) für eine Anschlussvorrichtung (1) gemäss einem der Ansprüche 1 bis 19, mit zwei Klemmbacken, die zum Verpressen der Presshülse (5) an diese anzulegen sind, **dadurch gekennzeichnet, dass** die Pressbacken jeweils aussenseitig zwei im Abstand zueinander angeordnete geneigte Flächen (24, 25) aufweisen, wobei eine erste geneigte Fläche (24) beim Verpressen an einer Fläche (9) des Isolierringes (6) anliegbar und mit der zweiten geneigten Fläche (25) auf einen im Abstand zum Isolierring (6) angebrachten Kontrollkörper (16) eine achsiale Scherkraft ausübbar ist, um diesen zu entfernen bzw. abzuscheren.

21. Verfahren zur Herstellung einer Pressverbindung, wobei eine Anschlussvorrichtung gemäss einem der Ansprüche 1 bis 19 mit einem Presswerkzeug (23) verpresst wird, **dadurch gekennzeichnet, dass** beim Verpressen der Anschlussvorrichtung durch das Presswerkzeug (23) ein an der Presshülse (5) befestigter Kontrollkörper (16) wenigstens bereichsweise abgeschert wird.

## Revendications

1. Dispositif de raccordement pour un tuyau (2), comprenant un raccord (4) qui possède au moins une douille de support (27) avec une douille de serrage (5) qui est déformable plastiquement et qui est connectée à une extrémité interne à une bague d'isolation (6) qui est transparente et qui permet un contrôle visuel d'une extrémité du tuyau (2) poussée sur la douille de support (27), **caractérisé en ce que** la douille de serrage (5) vient en prise axialement à travers la bague d'isolation (6) et est fixée de manière imperdable sur le raccord (4) avec un bord de fixation (11) et **en ce que** la douille de serrage (5) présente, dans la région de la bague d'isolation (6), des orifices (10) pour le contrôle visuel.

2. Dispositif selon la revendication 1, **caractérisé en ce que** la bague d'isolation (6) est fixée dans lesdits orifices (10) sur la douille de serrage (5).

3. Dispositif selon la revendication 2, **caractérisé en ce que** la bague d'isolation (6) vient en prise à travers lesdits orifices (10) et forme sur le côté interne de la douille de serrage (5) des saillies (29) pour la fixation axiale d'une extrémité insérée du tube.

4. Dispositif selon la revendication 3, **caractérisé en ce que** la bague d'isolation (6) forme sur le côté interne de la douille de serrage (5) des nervures (29) s'étendant axialement.

5. Dispositif selon l'une quelconque des revendications 2 à 4, **caractérisé en ce que** la bague d'isolation (6) est une pièce moulée par injection et l'injection s'effectue à travers lesdits orifices (10).

6. Dispositif selon l'une quelconque des revendications 1 à 5, **caractérisé en ce qu'**un bord d'étanchéité (7) s'étendant axialement de la bague d'isolation (6) forme avec une surface d'enveloppe d'un épaulement (13) du raccord (4) une connexion étanche.

7. Dispositif selon la revendication 6, **caractérisé en ce que** le bord d'étanchéité (7) dépasse axialement de la douille de serrage (5).

8. Dispositif selon la revendication 7, **caractérisé en ce que** ledit épaulement (13) du raccord (4) présente une nervure périphérique (14) sur laquelle repose le bord d'étanchéité (7) de la bague d'isolation (6).

9. Dispositif selon l'une quelconque des revendications 1 à 8, **caractérisé en ce que** la bague d'isolation (6) présente un bourrelet (8) servant de guidage pour un outil de pressage (23) .

10. Dispositif selon la revendication 9, **caractérisé en ce que** le bourrelet (8) présente au moins une surface inclinée (9) en vue du centrage de l'outil de pressage (23).

11. Dispositif selon l'une quelconque des revendications 1 à 10, **caractérisé en ce que** la douille de serrage (5) est élargie à une extrémité libre et forme un épaulement qui est prévu pour guider (19) l'outil de pressage (23).

12. Dispositif selon l'une quelconque des revendications 1 à 11, **caractérisé en ce que** la douille de pressage (5) présente sur son côté extérieur un corps de contrôle (16) au moins partiellement périphérique, qui peut être enlevé lors du pressage par l'outil de pressage (23) et notamment enlevé par cisaillement.

13. Dispositif selon la revendication 12, **caractérisé en ce que** le corps de contrôle (16) est interrompu sur sa périphérie et au moins deux segments (16a) s'étendant dans la direction périphérique sont ainsi formés.

14. Dispositif selon la revendication 12 ou 13, **caractérisé en ce que** le corps de contrôle (16) est une pièce moulée par injection.

15. Dispositif selon l'une quelconque des revendications 12 à 14, **caractérisé en ce que** le corps de contrôle (16) vient en prise dans d'autres orifices (18) de la douille de serrage (5) et est ancré dans ceux-ci.

16. Dispositif selon la revendication 15, **caractérisé en ce que** le corps de contrôle (16) est injecté à travers les autres orifices (18) et forme sur le côté interne une pièce de guidage (19) qui est prévue en tant que guidage (19) lors de l'insertion d'une extrémité du tuyau.

17. Dispositif selon la revendication 16, **caractérisé en ce que** la pièce de guidage (19) est disposée du côté interne d'un élargissement (20) de la douille de serrage (5).

18. Dispositif selon l'une quelconque des revendications 12 à 17, **caractérisé en ce que** le corps de contrôle (16) est fabriqué à partir d'un plastique transparent et coloré avec un colorant, et est visuellement frappant.

19. Dispositif selon l'une quelconque des revendications 12 à 18, **caractérisé en ce que** le corps de contrôle (16) présente du côté extérieur de la douille de serrage (5) une surface inclinée (17) qui peut être amenée en prise avec une surface inclinée de l'outil de pressage (23) en vue du cisaillement.

20. Outil de pressage (23) pour un dispositif de raccordement (1) selon l'une quelconque des revendications 1 à 19, comprenant deux mâchoires de serrage qui, pour le pressage de la douille de pressage (5), peuvent être appliquées contre elle, **caractérisé en ce que** les mâchoires de pressage présentent chacune du côté extérieur deux surfaces (24, 25) inclinées espacées l'une de l'autre, une première surface inclinée (24) pouvant être appliquée lors du pressage contre une surface (9) de la bague d'isolation (6) et pouvant exercer une force de cisaillement axiale avec la deuxième surface inclinée (25), sur un corps de contrôle (16) monté à distance de la bague d'isolation (6), afin de l'enlever ou de le cisailler.

21. Procédé de fabrication d'une connexion par pression, un dispositif de raccordement selon l'une quelconque des revendications 1 à 19 étant pressé avec un outil de pressage (23), **caractérisé en ce que** lors du pressage du dispositif de raccordement par l'outil de pressage (23), un corps de contrôle (16) fixé sur la douille de serrage (5) est au moins en partie cisaillé.

## Claims

1. Connecting device for a conduit pipe (2) with a fitting (4) incorporating at least one support sleeve (27), with a press-fit sleeve (5) which is plastically deformable and which is joined, at an inner end, to an insulating ring (6) which is transparent and permits a visual inspection of an end of the conduit pipe (2) pushed onto the support sleeve (27), **characterised in that** the press-fit sleeve (5) extends axially through the insulating ring (6) and is non-releasably anchored on the fitting (4) by means of a retaining rim (11) and the press-fit sleeve (5) has orifices (10) in the region of the insulating ring (6) to permit visual inspection.

2. Device as claimed in claim 1, **characterised in that** the insulating ring (6) is secured to the press-fit sleeve (5) through said orifices (10).

3. Device as claimed in claim 2, **characterised in that** the insulating ring (6) extends through said orifices (10) and forms projections (29) on the internal face of the press-fit sleeve (5) for axially anchoring an inserted pipe end.

4. Device as claimed in claim 3, **characterised in that** the insulating ring (6) forms axially extending ribs (29) on the internal face of the press-fit sleeve (5) .

5. Device as claimed in one of claims 2 to 4, **characterised in that** the insulating ring (6) is a part that is injection-moulded on and is injected through said orifices (10).

6. Device as claimed in one of claims 1 to 5, **characterised in that** an axially extending sealing edge (7) of the insulating ring (6) forms a seal connection in conjunction with an external face of a shoulder (13) of the fitting (4) .

7. Device as claimed in claim 6, **characterised in that** the sealing edge (7) extends axially beyond the press-fit sleeve (5).

8. Device as claimed in claim 7, **characterised in that** said shoulder (13) of the fitting (4) has a peripherally extending rib (14), on which the sealing edge (7) of the insulating ring (6) lies.

9. Device as claimed in one of claims 1 to 8, **characterised in that** the insulating ring (6) has a bead (8) serving as a guide for a pressing tool (23).

10. Device as claimed in claim 9, **characterised in that** the bead (8) has at least one inclined surface (9) for centring the pressing tool (23).

11. Device as claimed in one of claims 1 to 10, **characterised in that** the press-fit sleeve (5) is flared at a free end and forms a shoulder, which is provided as a means of guiding (19) the pressing tool (23).

12. Device as claimed in one of claims 1 to 11, **characterised in that** the press-fit sleeve (5) has a control body (16) extending round at least certain regions of its external face, which can be removed and in particular severed by the pressing tool (23) during the pressing process.

13. Device as claimed in claim 12, **characterised in that** the control body (16) is interrupted at its periphery, as a result of which two segments (16a) are formed extending in the circumferential direction.

14. Device as claimed in claim 12 or 13, **characterised in that** the control body (16) is a part that is injection-moulded on.

15. Device as claimed in one of claims 12 to 14, **characterised in that** the control body (16) locates in other orifices (18) of the press-fit sleeve (5) and is anchored in them.

16. Device as claimed in claim 15, **characterised in that** the control body (16) is injected through the other orifices (18) and forms a guide part (19) on the internal face, which is provided as a guide (19) during insertion of a pipe end.

17. Device as claimed in claim 16, **characterised in that** the guide part (19) is disposed on the internal face of a flared region (20) of the press-fit sleeve (5).

18. Device as claimed in one of claims 12 to 17, **characterised in that** the control body (16) is made from a transparent plastic coloured with a dye and is visually conspicuous.

19. Device as claimed in one of claims 12 to 18, **characterised in that** the control body (16) has an inclined surface (17) at the external face of the press-fit sleeve (5) which can be moved into engagement with an inclined surface of the pressing tool (23) for severing purposes.

20. Pressing tool (23) for a connecting device (1) as claimed in one of claims 1 to 19, with two clamping jaws which are placed against the press-fit sleeve (5) in order to press it, **characterised in that** the pressing jaws have two externally disposed inclined surfaces (24, 25) spaced at a distance apart from one another, and a first inclined surface (24) can be placed against a surface (9) of the insulating ring (6) during the press-fitting process and an axial shearing force can be applied by means of the second inclined surface (25) to a control body (16) mounted at a distance from the insulating ring (6) in order to remove or sever it.

21. Method of manufacturing a press-fit connection, whereby a connecting device as claimed in one of claims 1 to 19 is press-fitted by means of a pressing tool (23), **characterised in that** as the connecting device is pressed by the pressing tool (23), at least certain regions of a control body (16) attached to the press-fit sleeve (5) are severed.
